# EUROPÄISCHE PATENTSCHRIFT

(11) **EP 0 373 460 B1**
(45) Veröffentlichungstag und Bekanntmachung des Hinweises auf die Patenterteilung: **18.01.1995**
(21) Anmeldenummer: 89122274.7
(22) Anmeldetag: 02.12.1989
(51) Int. Cl.: B09B 1/00, B09B 3/00

(54) **Verfahren zur Deponierung von Abfällen**
Method of dumping waste
Méthode pour le dépôt des déchets

(30) Priorität: 15.12.1988 DE 3842215
(43) Veröffentlichungstag der Anmeldung: 20.06.1990
(73) Patentinhaber: BAYER AG, 51368 Leverkusen (DE)
(72) Erfinder: Beyer, Joachim, Dipl.-Ing., D-5068 Odenthal (DE); Koglin, Bernd, Prof.Dr., D-5060 Bergisch Gladbach 2 (DE); Rink, Rolf, D-5000 Köln 80 (DE); Roth, John-Edwin, Dipl.-Ing., D-5060 Bergisch-Gladbach 1 (DE)

(56) Entgegenhaltungen:
- EP-A- 0 107 269
- AT-B- 385 215
- DE-A- 1 940 434
- DE-A- 3 031 525
- DE-A- 3 131 100
- FR-A- 2 579 908
- US-A- 3 583 164

## Beschreibung

Die Erfindung betrifft ein Verfahren zur Deponierung von Abfällen, bei dem die Abfalle zu Paketen verdichtet werden, die auf einer Deponie wie Bausteine abgelagert werden können.

Nach dem Stand der Technik wird der Abfall mit Fahrzeugen zur Deponie gefahren und nach Anlieferung bzw. Umladung und/oder Vorbehandlung mit einer möglichst hohen Dichte eingebaut. Der Einbau wird mit Stampffußverdichtern und Raupen vorgenommen. Beim Flacheneinbau werden die Abfalle auf der horizontalen oder geneigten Betriebsfläche ausgebreitet und durch mehrmaliges Befahren mit dem Stampffußverdichter zerkleinert, zusammengepreßt und verdichtet. Für den Miteinbau von nicht zerkleinerbaren sperrigen Abfällen und Schlämmen ist zeitweilig auch der Kippkanteneinbau vertretbar. Dabei werden die festen Abfälle so eingebaut, daß sie von dem bereits verdichteten Teil der Betriebsfläche über eine sogenannte Kippkante abgeschoben werden. Die festen Abfälle sind dabei etwa 10 m vor der Kippkante abzuladen, durch mehrmaliges Befahren zu zerkleinern und erst dann über die Kippkante zu schieben. Die dabei entstehende Böschung sollte, zumindest am Ende des Betriebstages, verdichtet und abgedeckt werden. Die sperrigen Abfälle und Schlämme werden am Fuß der Kippkante abgeladen und von oben überschüttet.

Trotz der beschriebenen Verdichtungsmaßnahmen treten Setzungen des Deponiekörpers noch über einen langen Zeitraum nach Schüttende auf. Sie wirken sich ungünstig auf Oberflächen- und Zwischenabdeckungen sowie auf Schacht- und Kanalsysteme aus. Ein Teil der Setzungen, der auf mechanischen Vorgängen beruht, läßt sich durch nachträgliche Tiefenverdichtung des Deponiekörpers vorwegnehmen.

Diese Verdichtungstechnik besteht darin, daß durch Fallenlassen von Fallmassen von beispielsweise 20 t aus beispielsweise 20 m Fallhöhe auf die Abfalloberfläche Lastimpulse erzeugt werden, die eine tiefreichende Verdichtung bewirken sollen. Bei der Anwendung muß allerdings auf Einbauten im Deponiekörper, wie Basisabdichtung, Entwässerungssystem und Entgasungssystem Rücksicht genommen werden. Abstände zwischen Verdichtungsort und den vorgenannten Einrichtungen sollten mindestens 10 m in der Vertikalen und in der Horizontalen betragen. Praktisch auszuschließen ist diese Verdichtungstechnik daher dann, wenn in Schichten von etwa 10 m Höhenabstand jeweils bleibende Zwischenabdichtungen in den Deponiekörper eingebaut werden.

Bekannt ist auch die Möglichkeit einer Vorbehandlung von Abfällen vor der Deponierung. So müssen bestimmte Abfallstoffe vorbehandelt werden, bevor sie auf einer Deponie abgelagert werden können. Zu Vorbehandlungszielen wie z.B. Neutralisieren, Entgiften, Entwässern, Verfestigen dienen Chemisch-Physikalische Behandlungsanlagen.

Als Chemisch-Physikalische Behandlungsanlagen (CPB) gelten - i.d.R. ortsfeste (aber auch mobile) - Anlagen mit technischen Einrichtungen zur chemischen und physikalischen Behandlung von Abfällen (ohne Verbrennung und Pyrolyse) mit dem Ziel der Verwertung und/oder umweltverträglichen Entsorgung.

CPB haben zur Aufgabe, Abfälle, insbesondere Sonderabfälle, unter folgenden Zielrichtungen zu behandeln:
- möglichst hohe Verwertung
- Reduzierung der zu entsorgenden Abfallmenge
- Minderung des Gefährdungspotentials
- Ermöglichung weiterer Behandlungs- und Verwertungsschritte (z.B. Verbrennung) bzw. einer umweltverträglichen sonstigen Entsorgung (z.B. Deponierung).

Zur Behandlung kommen verschiedene chemische und physikalische Verfahren, einzeln oder in Kombination, in Betracht. Im wesentlichen handelt es sich um folgende Verfahren:

### Physikalische Verfahren

Sortierung
Entleerung von Aggregaten
Entwässerung
Konditionierung
Zentrifugieren
Flotation
Trocknung
Eindampfung
Destillation
Thermische Emulsionsspaltung
Ultrafiltration
Umkehrosmose
Adsorption
Strippen

### Chemische Verfahren

Chemische Emulsionsspaltung
Ionenaustausch
Neutralisation
Fällung
Oxidation
Reduktion
Zementation
Oberstes Gebot für die Errichtung und den Betrieb einer Deponie ist es, Umweltbeeinträchtigungen nach dem Stand der Technik zu vermeiden

Diesem Gebot wird nach dem heutigen Stand der Technik durch verschiedene zusätzliche Maßnahmen entsprochen, die große Sorgfalt und erheblichen Aufwand erfordern:

Wegen der bisher unvermeidlichen Setzungen müssen Schächte und Kanäle besonders geschützt eingebaut werden. Schächte werden beispielsweise mit einem Kiesring von mindestens 1 m Stärke umgeben. Es wird vorgeschlagen, Schächte nicht in die Böschung, sondern in den ebenen Teil der Deponie oder gar außerhalb der Deponie zu verlegen.

Wegen der nach dem heutigen Stand der Technik zu erwartenden Setzungen müssen die Oberflächenneigungen wesentlich steiler angelegt werden als im Endzustand erforderlich, damit auch nach den Setzungen noch der gezielte Wasserabfluß gewährleistet ist.

Die Permeabilität und die Eluierbarkeit des nach dem Stand der Technik deponierten Abfalls sind so groß, daß Sickerwässer aus Hausmüll- und Sonderabfalldeponien in jedem Fall einer Behandlung unterzogen werden müssen. Die Zusammensetzung des Sickerwassers aus 14 typischen Vielstoffsondermülldeponien wurde im Auftrag des Bundesministers für Umwelt, Naturschutz und Reaktorsicherheit von der Bayerischen Landesanstalt für Wasserforschung durchgeführt. Die Einzelergebnisse wurden zu einem sogenannten typischen Sickerwasser zusammengefaßt. Beispielsweise liegt der mittlere Wert für den Abdampfrückstand bei 64,4 g/l, für den CSB bei 7869 mg O₂/l und für den BSB₅ bei 4789 mg O₂/l.

Nach den bisherigen Erkenntnissen können die Sickerwassermengen in Abhängigkeit vom Verdichtungsgrad der Deponie festgelegt werden. Beispielsweise beträgt die Sickerwassermenge von Hausmülldeponien bei Verdichtung mit Raupen ca. 40 % der jährlichen Niederschlagsrate (entsprechend ca. 9m³/ha x d bei 750 mm NS/a) und bei Verdichtung mit Kompaktoren (Stampffußverdichtern) ca. 25 % der jährlichen Niederschlagsrate.

In der deutschen Offenlegungsschrift DE-A-3 031 525 wird ein Verfahren zur Verdichtung von kompressiblen Abfallstoffen beschrieben, mit dem die Abfallstoffe zu Ballen gepreßt und mit einer gegenüber dem jeweiligen Abfallstoff resistenten Kunststoffolie luftdicht umschlossen werden. Durch die Umhüllung mit der Kunststoffolie werden die Ballen zusammengehalten und mechanisch stabilisiert. Die Ballen können platzsparend auf der Deponie gelagert werden. Problematisch ist dabei wiederum die Setzung der Deponie, wenn sich die in vielen Lagen übereinander gestapelten Ballen unter dem hohen Druck deformieren.

Ausgehend von diesem Stand der Technik wurde ein Verfahren zur Deponierung von Abfällen in gegen Setzungen, Eluation und Permeation stabiler Form entwickelt, bei dem die Abfälle zu Paketen verdichtet werden und das erfindungsgemäß dadurch gekennzeichnet ist, daß von groben Anteilen befreite, in Form eines Schüttguts vorliegende kompaktierbare Abfälle mit Drücken von 10 bar bis 300 bar, bevorzugt 50 bar bis 200 bar, zu stapelfahigen Platten oder Blöcken mit hoher Festigkeit, geringer Eluierbarkeit und geringer Permeabilität mit einer Grundfläche von 1 m² bis 10 m², bevorzugt 2 m² bis 8 m² verpreßt werden.

Bevorzugte Ausführungsformen und Varianten dieses Verfahrens werden in den Unteransprüchen beschrieben.

Im folgenden wird das erfindungsgemäße Verfahren anhand von Zeichnungen näher erläutert. Es zeigen:
- Fig. 1: ein Fließschema für das erfindungsgemäße Verfahren einschließlich Vorbehandlung der Abfälle;
- Fig. 2: eine nach dem erfindungsgemäßen Verfahren aufgebaute Deponie;
- Fig. 3: eine nach dem gleichen Verfahren angelegte Deponie, bei der zusätzlich Bereiche von Abfallpaketen mit unterdurchschnittlicher Festigkeit und/oder überdurchschnittlicher Eluierbarkeit von Abfallpaketen mit überdurchschnittlicher Festigkeit und/oder unterdurchschnittlicher Eluierbarkeit umgeben sind (Einkapselung);
- Fig. 4: die zusätzliche Abdeckung einer Deponie nach Figur 1 bis 3 mit einer Kunststoffolie und
- Fig. 5: die Dränageschichten auf den mit der Kunststoffolie bedeckten geneigten Abfallschichten und die vertikalen Dränageschichten zwischen den großen mit Kunststoffolie eingekapselten Abfallvolumina.

Das erfindungsgemäße Verfahren setzt in vielen Fällen eine Vorbehandlung der Abfälle voraus, um sie in eine gut durch Pressen verdichtbare Form zu bringen oder störende Anteile zu entfernen. Diese Vorbehandlung umfaßt z.B.
- Entfeuchten mit Filterpressen, Membranfilterpressen, Siebbandpressen, Vollmantelschneckenzentrifugen, Siebzentrifugen, Filterzentrifugen und anderen für die mechanische Entwässerung bewährten Maschinen und Apparaten,
- Zerkleinern mit Backenbrechern, Walzenmühlen, Kugelmühlen, Rotor-/Stator-Mühlen und anderen bewährten Mühlen,
- Klassieren mit Sieben und Windsichtern,
- Sortieren mit Magnetscheidern, Windsichtern oder anderen bekannten Trennapparaten.

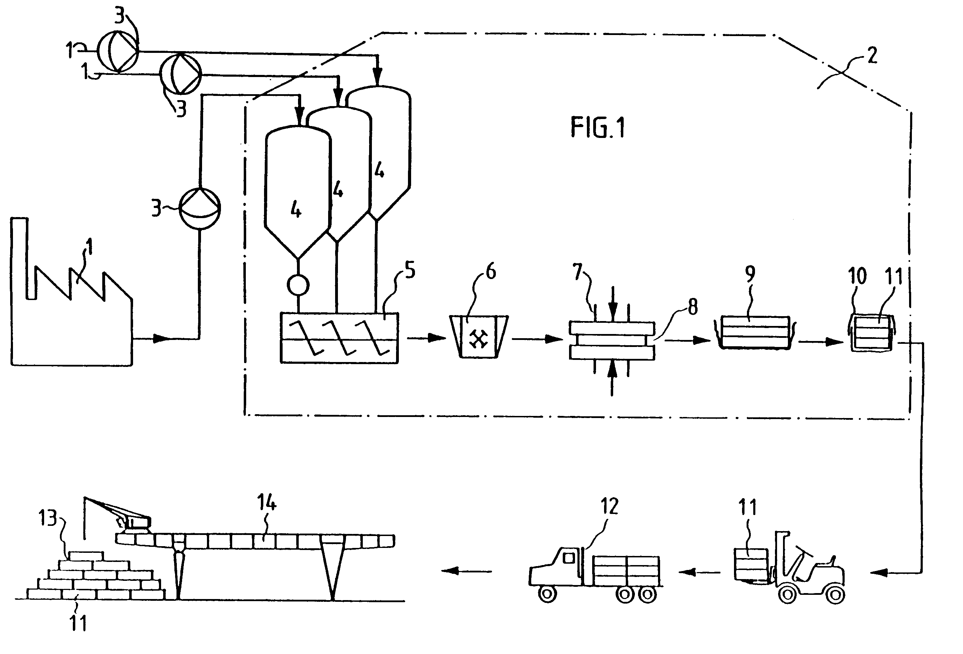

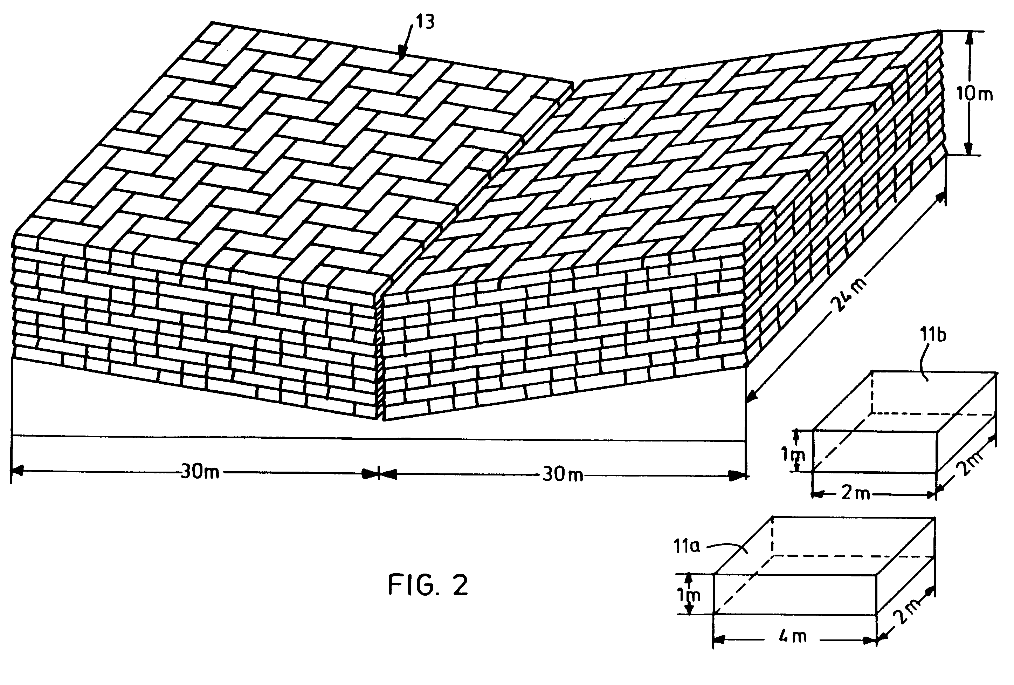

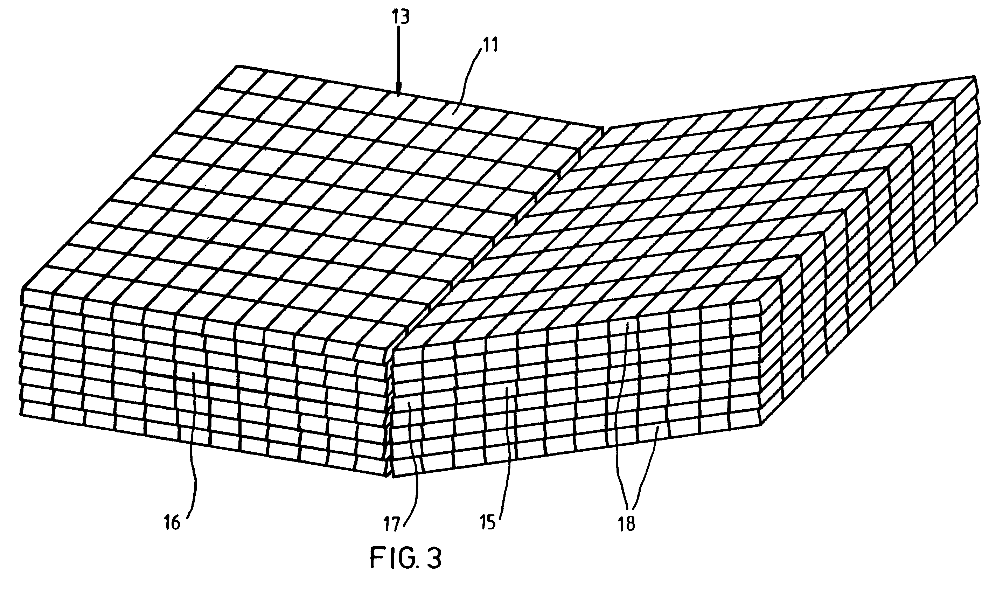

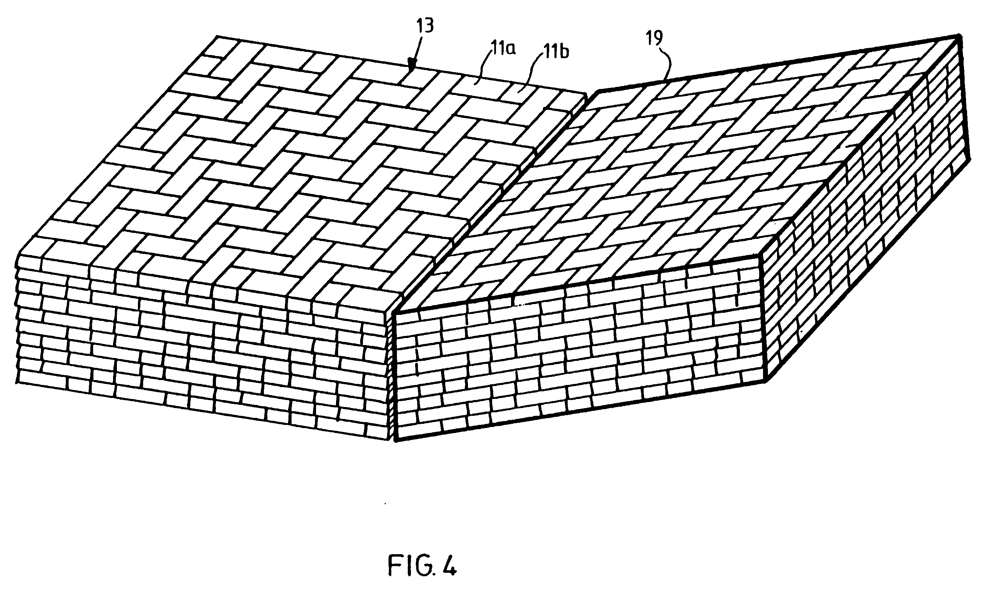

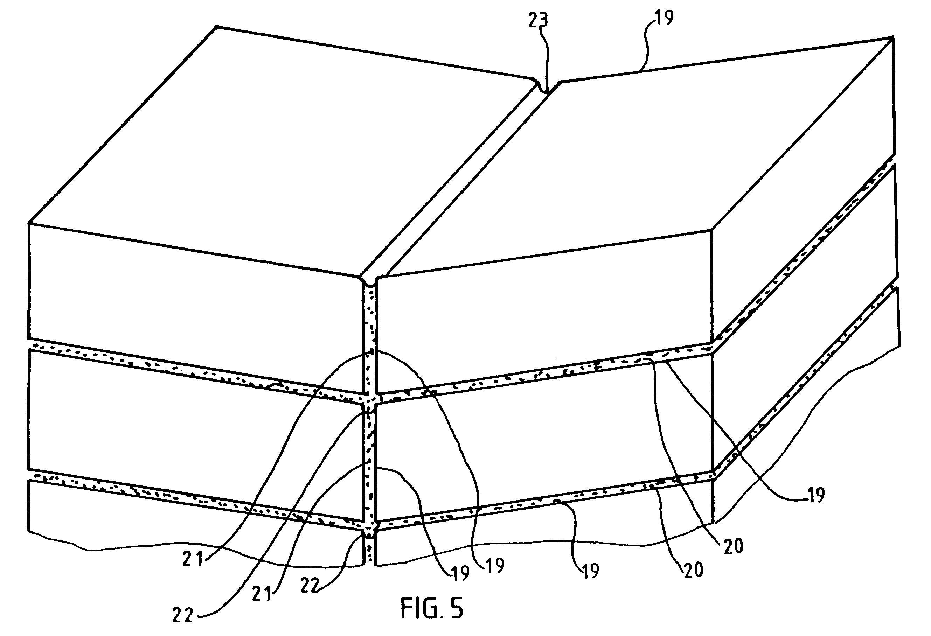

Diese Vorbehandlungsschritte können entweder schon beim Abfallerzeuger oder in einem zentralen Konditionierungsbetrieb durchgeführt werden. Die einzelnen Teilschritte werden nachfolgend im Rahmen eines Ausführungsbeispieles (siehe Figur 1) beschrieben.
1. Transport der anfallenden Abfälle von Abfallstellen 1 zu einem zentralen Konditionierungsbetrieb 2, wobei je nach Konsistenz und Menge der Abfälle pneumatische, hydraulische oder mechanische Förderanlagen 3 zum Einsatz kommen oder ein Transport mit Flurförderzeugen unter Verwendung von Gebinden vorzugsweise Containern durchgeführt wird.
2. Zwischenlagerung der Abfälle in geeigneten Bunkern, vorzugsweise Silos 4, mit einem Fassungsvermögen van wenigstens einer Tagesmenge, bevorzugt mehr als drei Tagesmengen eines jeden Abfalls.
3. Vergleichmäßigung von Abfallpartien unterschiedlicher Qualität im Silo 4 oder in kontinuierlichen oder diskontinuierlichen Feststaffmischern 5 und gegebenenfalls Verschneiden mit inerten Materialien wie z.B. Bauschuttfeinanteil, Bodenaushub, Asche, Schlacke derart, daß Mischungen mit breiter Korngrößenverteilung und hinreichend geringer Restfeuchte entstehen; gegebenenfalls Brechen von größeren Agglomeraten mit geeigneten Zerkleinerungsmaschinen 6.
4. Zuführen zu einer im Konditionierungsbetrieb 2 aufgestellten, hydraulischen Preßvorrichtung 7 und anschließendes Verpressen in Blöcke oder Platten 8 mit einer Grundfläche von 1 bis 10 m², vorzugsweise 4 bis 8 m² und einer Dicke von 10 bis 2,500 mm, bei Preßdrücken von 10 bis 300 bar, vorzugsweise 50 bis 200 bar.
   Die zu verwendenden Pressen können ähnlich wie Holz-Spanplattenpressen als Einetagen- und Mehretagenpressen mit oder ohne Entfeuchtungsmöglichkeit konstruiert sein. Solche Maschinen sind bekannt und werden für die Spanplattenindustrie gebaut. Die Beschickung und Entleerung der Pressen erfolgt ähnlich wie bei der Spanplattenherstellung. Mit derartigen Pressen werden bevorzugt Platten mit 30 bis 300 mm Dicke hergestellt.
   Es können aber auch Pressen verwendet werden, mit denen in einem Vorgang ein einheitlich verpreßter Block von 0,5 bis 3 m Höhe, bevorzugt von 1 bis 2 m Höhe, erzeugt wird.
5. Gegebenenfalls anschließendes Stapeln der Platten oder Blöcke 8 zu Paketen 9 von 0,5 bis 3 m Höhe, vorzugsweise 1 bis 2 m Höhe. Festes, staubdichtes und wasserdichtes Verpacken der Blöcke oder Plattenstapel mit Kunststoffolien 10. Das Verpacken mit Folie erfolgt nach an sich bekannten Verfahren wie Schrumpfen, Wickeln usw. Die verwendeten Folien können durch unterschiedliche Farbgebung verschiedene Abfallsorten kennzeichnen.
6. Verladen der fertigen Pakete 11 auf Lastkraftwagen 12 oder Schienenfahrzeuge und anschließender Transport zur Deponie 13.
7. Geordneter Einbau der Pakete 11 in die Deponie 13, versetzt und verzahnt (s. Fig. 2), mit geeigneten Hebe- und Förderzeugen 14. Die Einbauordnung kann so gewählt werden, daß größere Abschnitte mit einheitlicher Abfallzusammensetzung entstehen. Andererseits kann die Einbauordnung aber auch so gewählt werden, daß Bereiche von Abfallpaketen mit unterdurchschnittlicher Festigkeit und/oder überdurchschnittlicher Eluierbarkeit 15 völlig von Abfallpaketen mit überdurchschnittlicher Festigkeit und/ oder unterdurchschnittlicher Eluierbarkeit 16, 17, 18 eingekapselt werden (siehe Figur 3).
8. Abdeckung von fertiggestellten Einbauschichten (beispielsweise 10 m-Schichten) mit stabiler Kunststoffolie 19 von 1 bis 3 mm Stärke, wodurch eine vollständige Umschließung von größeren Volumina dieser Abfallschichten (10.000 bis 100.000 m³ ) mit derartiger Kunststoffolie erreicht wird, um während der Betriebsphase der Deponie 13 dauernd ein Eindringen von Niederschlagswasser in den Abfall zu verhindern (siehe Figur 4).
9. Aufbringen von Dränageschichten 20 auf den geneigten mit der Kunststoffolie bedeckten Abfallschichten und Einbringen von vertikalen Dränageschächten 21 zwischen den großen mit Kunststoffolie eingekapselten Abfallvolumina (siehe Fig. 5).

Aus Figur 2 ist der Aufbau und die Schichtung der nach dem erfindungsgemäßen Verfahren errichteten Deponie genauer ersichtlich. Man erkennt insbesondere die mauerartige Schichtung. Bei der Verpressung, Stapelung und Verpackung werden zweckmäßig Pakete 11 mit verschiedenen Größen in Form von Standardquadern 11a und Ausgleichsquadern 11b erzeugt, die nach dem in Figur 2 dargestellten Muster verlegt werden. Die Figur enthält ferner Dimensionierungsangaben für ein Bemessungsbeispiel.

Der Aufbau kann aber auch mit Abfallpaketen 11 einheitlicher Form erfolgen, beispielsweise mit Quadern 11b mit quadratischer Grundfläche (Figur 3).

Bei der Deponie nach Figur 3 wird davon Gebrauch gemacht, daß bei der Konfektionierung Abfallpakete 11 mit unterschiedlicher Festigkeit und Eluierbarkeit hergestellt werden können. Die Deponie wird dann so errichtet, daß mittlere Lagen 15 aus Abfallpaketen 11 mit geringerer Festigkeit und/oder höherer Eluierbarkeit von Stirnlagen 16, Seitenlagen 17 sowie von oberen und unteren Lagen 18 aus Abfallpaketen mit höherer Festigkeit und/oder geringerer Eluierbarkeit vollständig eingeschlossen werden. Auf diese Weise werden also Abfälle mit höherem Gefährdungspotential durch Abfälle mit geringerem Gefährdungspotential eingekapselt.

Figur 4 zeigt eine weitere Ausführungsform einer aus gepreßten Abfallblöcken 11 geschichteten Deponie. Hier wird der gesamte rechte Teil der Deponie von einer Kunststoffolie 19 mit einer Stärke von mehreren Millimetern umschlossen. Damit wird während des Betriebes der Deponie ein Eindringen von Niederschlagswasser in diesen Bereich verhindert.

Figur 5 zeigt ein Dränagesystem, bestehend aus geneigten Dränageschichten 20 auf den mit der Kunststoffolie 19 bedeckten Abfallschichten und die vertikalen Dränageschichten 21 zwischen den großen mit Kunststoffolie 19 eingekapselten Abfallvolumina. Die Dränageschichten bestehen aus Schüttungen der Kornfraktionen Sand und Kies mit einer überwiegenden Korngröße im Bereich von 1 mm bis 30 mm. Die Dicke der geneigten Dränageschichten 20 beträgt z.B. 40 mm, die Dicke der vertikalen Dränageschichten 21 beträgt z.B. 100 mm. Das an den Dränageschichten jeweils unten anfallende Sickerwasser wird in gelochten/geschlitzten Sickerrohren (Sammlern) 22 gefaßt und einem Sickerwasserentsorgungssystem zugefügt. Das Niederschlagswasser, das auf die mit Kunststoffolie 19 bedeckten Abfallschichten fällt, wird am Tiefpunkt 23 gefaßt und fließt in freiem Gefälle dem Regenwasserkanalsystem zu. Die Dränageschichten bleiben bei bestimmungsgemäßer Funktion der Dichtungen trocken. Sie sorgen dafür, daß auch beim Versagen von Dichtungselementen kein Flüssigkeitsaufstau im Deponiekörper erfolgen kann. Aufgrund der Kombination von gut durchlässigen Dränageschichten mit schlecht durchlässigen gepreßten Abfallschichten wird die Eluation der Abfälle sicher verhindert.

Nachfolgend werden noch einmal die wesentlichen Schritte des erfindungsgemäßen Verfahrens am Beispiel eines anorganischen Sonderabfalls guter Rieselfähigkeit erläutert.

Der anfallende Abfall wird mittels pneumatischer Förderung vom Ort 1 der Entstehung zu einem Silo 4 des Konfektionierungsbetriebs 2 transportiert. Davor kann nötigenfalls ein Entfeuchtungsschritt durchgeführt werden. Der Transport kann alternativ auch mittels Container auf LKW bewerkstelligt werden. Im Silo 4 kann durch dauerndes Umwälzen des Inhalts eine Vergleichmäßigung des Abfalls erreicht werden.

Aus dem Silo 4 gelangt der Abfall über einen Mischer 5, wo ein Verschneiden mit inerten, trockenen Stoffen, z.B. feiner Bauschutt, erfolgen kann, zu einer Preßvorrichtung 7.

In der Presse 7 werden aus dem Sonderabfall Platten 8 mit Grundflächen von 2 m x 4 m und einer Dicke von 125 mm gepreßt. Der Preßdruck beträgt 100 bar. Dabei wird eine Volumenreduzierung von 30 % erreicht. Nach dem Pressen werden die Platten zu Stapeln 9 von 1,25 m geschichtet und anschließend mit Kunststoffolie 10 fest, wasser- und staubdicht verpackt. Mit der Farbe der Folie wird die Abfallart gekennzeichnet.

Die Pakete 11 werden anschließend mit einem Kran auf LKW 12 verladen und zur Deponie 13 transportiert. Dort werden die LKW 12 mit einem Kran 14 entladen und die Pakete 11 geordnet abgelagert. Der Aufbau der Deponie 13 erfolgt mit verzahnter Anordnung der Pakete.

In der Literatur wird eine Vielzahl von Methoden und Verfahren genannt und diskutiert, um die Standfestigkeit von Deponieabfällen zu erhöhen und um die Permeabilität und die Eluierbarkeit zu verringern. Hierzu zählen zum Beispiel die Zugabe von Zement oder anderen Bindemitteln zum Abfall.

Überraschend wurde gefunden, daß durch alleiniges Pressen mit hohen Drücken die Festigkeit der Abfälle um mehrere Zehnerpotenzen erhöht und die Permeabilität und die Eluierbarkeit um mehrere Zehnerpotenzen verringert werden können.

Das erfindungsgemäße Verfahren ist universell für alle Abfälle anwendbar, die als Schüttgut vorliegen und die von groben Bestandteilen wie großen Steinen, Metallstücken etc. befreit sind.

Selbstverständlich können die bekannten Verfestigungsverfahren, wie Zugabe von Zement oder anderen Bindemitteln, die für jeden Abfall speziell in der Rezeptur angepaßt werden müssen, beim erfindungsgemäßen Verfahren noch zusätzlich angewandt werden.

Das erfindungsgemäße Verfahren bietet bei der Deponierung von Abfällen gegenüber der derzeit gebräuchlichen modernen Deponietechnik folgende wichtige Vorteile:
- Erhöhung der Festigkeit der Abfälle, dadurch deutliche Erhöhung der Standfestigkeit der Deponie, praktisch vollständiges Vermeiden von Setzungen,
- optimale Ausnutzung des Deponievolumens durch extreme Verdichtung der Abfälle,
- starke Verminderung der Permeabilität und der Eluierbarkeit der Abfälle, dadurch starke Reduzierung des Anfalls von belastetem Sickerwasser,
- Reduzierung der Anzahl der Transporte zur Deponie, Erhöhung der Transportsicherheit,
- vollständige Vermeidung von Staubbelästigung beim Transport der Abfälle zur Deponie und beim Einbau in die Deponie durch Verpackung mit Kunststoffolie,
- vollständige Vermeidung der Kontamination des Sickerwassers durch die neu eingebauten Abfallpakete,
- starke Reduzierung des Anfalls von Sickerwasser.

Das erfindungsgemäße Verfahren kann eingesetzt werden zur Entsorgung von Kommunen und Betrieben aller Art, die kompaktierbaren Abfall erzeugen und diesen einer Deponie zuführen müssen.

## Patentansprüche

1. Verfahren zur Deponierung von Abfällen, bei dem die Abfälle zu Paketen verdichtet werden, die auf einer Deponie wie Bausteine abgelagert werden, dadurch gekennzeichnet, daß von groben Anteilen befreite, in Form eines Schüttgutes vorliegende, kompaktierbare Abfälle mit Drücken von 10 bar bis 300 bar, bevorzugt 50 bar bis 200 bar, zu stapelfähigen Platten oder Blöcken mit hoher Festigkeit, geringer Eluierbarkeit und geringer Permeabilität mit einer Grundfläche von 1 m² bis 10 m², bevorzugt 2 m² bis 8 m², verpreßt werden.

2. Verfahren nach Anspruch 1, dadurch gekennzeichnet, daß die Platten oder Blöcke einzeln oder in Stapeln mit Folie fest, staubdicht und wasserdicht verpackt werden.

3. Verfahren nach Ansprüchen 1 und 2, dadurch gekennzeichnet, daß die Abfälle in einem zentralen Konditionierungsbetrieb in Bunkern, vorzugsweise Silos, mit Fassungsvermögen von mindestens einer Tagesmenge, vorzugsweise 3 bis 10 Tagesmengen eines jeden Abfalls, zwischengelagert werden.

4. Verfahren nach Ansprüchen 1 bis 3, dadurch gekennzeichnet, daß die Abfälle durch Entfeuchten, Zerkleinern, Klassieren oder Sortieren derart vorbehandelt werden, daß ein Schüttgut ohne Grobanteile von Steinen, Metall etc. mit geringer Restfeuchte entsteht.

5. Verfahren nach Ansprüchen 1 bis 4, dadurch gekennzeichnet, daß unterschiedliche Abfälle im Silo oder in kontinuierlichen oder diskontinuierlichen Feststoffmischern derart untereinander oder mit inerten Materialien wie Bauschuttfeinanteil, Bodenaushub, Asche, Schlacke vermischt werden, daß Schüttgutmischungen mit breiter Korngrößenverteilung und geringer Restfeuchte entstehen,

6. Verfahren nach Ansprüchen 1 und 2, dadurch gekennzeichnet, daß die Platten zu einer Stärke von 10 bis 1.250 mm, bevorzugt von 30 bis 300 mm Stärke gepreßt, anschließend zu Stapeln von 0,5 bis 2,5 m, bevorzugt von 1 bis 2 m Höhe geschichtet und danach in dieser Form mit Folie verpackt werden.

7. Verfahren nach Anspruch 1 und 2, dadurch gekennzeichnet, daß die Blöcke zu einer Höhe von 0,5 bis 2,5 m, bevorzugt 1 bis 2 m, gepreßt und anschließend in dieser Form mit Folie verpackt werden.

8. Verfahren nach Ansprüchen 1, 6 und 7, dadurch gekennzeichnet, daß zum Verpacken der Abfallplatten oder Abfallplattenstapel LDPE-Folien verwendet werden.

9. Verfahren nach Ansprüchen 1 und 6 bis 8, dadurch gekennzeichnet, daß die Art der verpackten Abfälle durch farbige Folien kenntlich gemacht wird.

10. Verfahren nach Ansprüchen 1 bis 9, dadurch gekennzeichnet, daß die Elemente von gepreßtem und verpacktem Abfall auf der Deponie wie Bausteine zu kompakten Schichten von 5 bis 20 m Höhe, bevorzugt von etwa 10 m Höhe aneinandergesetzt und übereinandergesetzt werden, bevorzugt in versetzter und verzahnter Form.

11. Verfahren nach Anspruch 10, dadurch gekennzeichnet, daß Elemente von Abfällen, deren Eluate höhere Schadstoffkonzentrationen aufweisen, von druckfesten Elementen geringer Permeabilität eingekapselt werden, deren Eluate geringere Schadstoffkonzentrationen aufweisen.

12. Verfahren nach Ansprüchen 1, 10 und 11, dadurch gekennzeichnet, daß Zwischenabdeckungen aus Kunststoff von 1 bis 3 mm Stärke über diesen Abfallschichten angebracht werden, bevorzugt HDPE-Bahnen.

13. Verfahren nach Anspruch 12, dadurch gekennzeichnet, daß die Zwischenabdeckungen aus Kunststoff beim Weiterbau der Deponie im Abfallkörper verbleiben, mit einer dränagefähigen Schicht überdeckt und an ein Wasserentsorgungsnetz angeschlossen werden.

## Claims

1. Process for dumping refuse in which the refuse is compressed into packages which are stored like building blocks in a dump, characterized in that compactable refuse free from coarse parts, present in the form of a bulk material, is press compacted with pressures of 10 bar to 300 bar, preferably 50 bar to 200 bar, into slabs or blocks which can be stacked, said slabs or blocks having high solidity, low elutability and low permeability, with an area of 1 m² to 10 m², preferably 2 m² to 8 m².

2. Process according to Claim 1, characterized in that the slabs or blocks are packaged with sheeting, individually or in stacks such that they are solid, dustproof and waterproof.

3. Process according to Claims 1 and 2, characterized in that the refuse is intermediately stored in a central conditioning operation, in bins, preferably silos with cubical capacity of at least one daily load, preferably 3 to 10 daily loads of each refuse.

4. Process according to Claims 1 to 3, characterized in that the refuse is pretreated by dehumidifying, crushing, grading or sorting such that a bulk material without coarse parts of stone, metal etc, and with low residual moisture results.

5. Process according to Claims 1 to 4, characterized in that different refuse is mixed together or with inert materials like building rubble fines, excavated earth, ashes and slag, in the silo or in continuous or discontinuous solid matter mixers such that bulk material mixtures with wide grain size distribution and low residual moisture result.

6. Process according to Claims 1 and 2, characterized in that the slabs are pressed to a thickness of 10 to 1,250 mm, preferably a thickness of 30 to 300 mm, are then stacked to a height of 0.5 to 2.5 m, preferably a height of 1 to 2 m and are then packaged in this shape with sheeting.

7. Process according to Claim 1 and 2, characterized in that the blocks are pressed to a height of 0.5 to 2.5 m, preferably 1 to 2 m and are then packaged in this shape with sheeting.

8. Process according to Claims 1, 6 and 7, characterized in that LDPE sheets are used to package the refuse slabs or refuse slab stacks.

9. Process according to Claims 1 and 6 to 8, characterized in that the kind of packaged refuse is indicated by coloured sheets.

10. Process according to Claims 1 to 9, characterized in that the elements of pressed and packaged refuse in the dump are placed together and on top of one another like building blocks to form compact layers 5 to 20 m high, preferably approximately 10 m high, preferably in an offset and interlocked shape.

11. Process according to Claim 10, characterized in that elements of refuse, of which the eluates comprise higher contaminant concentrations, are encapsulated by compression-proof elements of low permeability, the eluates of which comprise lower contaminant concentrations.

12. Process according to Claims 1, 10 and 11, characterized in that intermediate covers made of plastics material of 1 to 3 mm thickness are placed over these refuse layers, preferably HDPE sheets.

13. Process according to Claim 12, characterized in that the intermediate covers made of plastics material remain in the refuse body when the dump is built further, are covered with a layer which allows drainage and are connected to a water removal system.

## Revendications

1. Procédé de mise en décharge de déchets, dans lequel les déchets sont compactés sous forme de paquets qui sont mis en décharge à la manière de blocs de construction, caractérisé en ce que les déchets compactables, débarrassés des composants grossiers et se présentant sous forme de matières en vrac, sont comprimés sous des pressions de 10 bar à 300 bar et, de préférence, de 50 bar à 200 bar, pour former des plaques ou des blocs empilables de grande résistance mécanique, de faible capacité d'élution et de faible perméabilité, ayant une surface horizontale de 1 m² à 10 m² et, de préférence, de 2 m² à 8 m².

2. Procédé selon la revendication 1, caractérisé en ce que les plaques ou les blocs sont emballés individuellement ou sous forme de piles par une feuille mince, de manière résistante et étanche à l'eau et à la poussière.

3. Procédé selon les revendications 1 et 2, caractérisé en ce que les déchets subissent un entreposage intermédiaire dans une installation centrale de conditionnement dans des abris et, de préférence, dans des silos ayant une capacité d'au moins 1 jour et, de préférence, de 3 à 10 jours pour chacun des déchets.

4. Procédé selon les revendications 1 à 3, caractérisé en ce que les déchets subissent un prétraitement de déshydratation, de fermentation, de classement ou de triage, de façon à obtenir un produit en vrac sans composants grossiers tels que pierres, métal, etc. et avec une faible humidité résiduelle.

5. Procédé selon les revendications 1 à 4, caractérisé en ce que différents déchets sont mélangés dans des silos ou dans des mélangeurs pour matières solides fonctionnant de manière continue ou discontinue, les uns avec les autres, ou avec des matériaux inertes tels que déchets fins de construction, déblais, cendres ou scories, afin d'obtenir des mélanges de matières en vrac ayant une large distribution de la granulométrie et une faible humidité résiduelle.

6. Procédé selon les revendications 1 et 2, caractérisé en ce que les plaques sont comprimées pour obtenir une épaisseur de 10 à 1250 mm et, de préférence, de 30 à 300 mm puis sont empilées en piles de 0,5 à 2,5 m et, de préférence, de 1 à 2 m de hauteur et sont emballées sous cette forme par une feuille mince.

7. Procédé selon les revendications 1 et 2, caractérisé en ce que les blocs sont comprimés pour obtenir une hauteur de 0,5 à 2,5 m et, de préférence, de 1 à 2 m, puis sont emballés sous cette forme par une feuille mince.

8. Procédé selon les revendications 1, 6 et 7, caractérisé en ce que l'on utilise, pour l'emballage des plaques de déchets ou des piles de plaques de déchets, des feuilles de LDPE.

9. Procédé selon les revendications 1 et 6 à 8, caractérisé en ce que la nature des déchets emballés est indiquée par la couleur des feuilles minces.

10. Procédé selon les revendications 1 à 9, caractérisé en ce que les éléments de déchets comprimés et emballés sont disposes en décharge comme des blocs de construction pour former des couches compactes de 5 à 20 mètres de hauteur et, de préférence, de 10 m de hauteur, en les plaçant à côté les uns des autres et les uns sur les autres, de préférence sous une forme avec appareillage et engrènement.

11. Procédé selon la revendication 10, caractérisé en ce que les éléments de déchets dont les éluats contiennent des concentrations élevées en substances toxiques sont entourés par des éléments résistant à la pression et de faible perméabilité, dont les éluats présentent des concentrations plus faibles en matières toxiques.

12. Procédé selon les revendications 1, 10 et 11, caractérisé en ce que des recouvrements intermédiaires en matière plastique, d'une épaisseur de 1 à 3 mm, sont placés sur ces couches de déchets, ces recouvrements étant formés, de préférence, de bandes de HDPE.

13. Procédé selon la revendication 12, caractérisé en ce que les recouvrements intermédiaires en matière plastique restent dans la masse des déchets au cours de l'évolution de la décharge, sont recouverts par une couche drainante et sont raccordés à un réseau d'évacuation d'eau.
